# EUROPEAN PATENT APPLICATION

(11) **EP 2 755 400 A2**
(43) Date of publication of application: **16.07.2014**
(21) Application number: 13174000.3
(22) Date of filing: 27.06.2013
(51) Int. Cl.: H04N 21/458, H04H 20/20, H04H 20/91, H04N 21/462

(54) **Digital broadcasting receiving device and method of receiving a section of a data file via a broadcast network and remaining sections via Internet**

(30) Priority: 11.01.2013 KR 20130003382
(71) Applicant: Samsung Electronics Co., Ltd, Gyeonggi-do 443-742 (KR)
(72) Inventor: Park, Seung-ho, Dongjak-gu Seoul (KR)
(74) Representative: Venner Shipley LLP

(57) **Abstract**

A method of receiving data of a digital broadcast receiving device is provided. The method includes receiving a predetermined section of a data file including a plurality of sections, through a broadcast signal network, and receiving the remaining sections of the plurality of sections of the data file through an Internet network.

## Description

The present invention relates to a digital broadcasting receiving device and a method of receiving data. More particularly, exemplary embodiments relate to a digital broadcasting receiving device and a method of receiving data, which efficiently receives data through both a broadcast network and an Internet network.

To upgrade firmware, a set-top box generally uses one of two methods downloading the firmware through the TCP/IP Internet network and through a broadcast network.

In response to the firmware being downloaded through the TCP/IP Internet network, the downloading operation is performed in the background in order to reduce the time required for exposing the upgrading operation to a user. This occurs while a user views a broadcast while not recognizing that an upgrading operation is possible.

In response to the firmware being downloaded through the broadcast network, a broadcast signal is used and this is advantageous for concurrently upgrading all set-top boxes from among a plurality of digital broadcasting subscribers (users). However, in this case, the upgrading operation is generally performed during idle time of the set-top box in order to reduce the time it takes to expose the upgrading operation to a user. For example, the firmware is generally upgraded at dawn when there is no user input during certain times.

In response to the TCP/IP network being used to download the firmware, the Internet network is used. Thus, when the firmware of a plurality of users' set-top boxes is concurrently upgraded, the Internet network becomes overloaded, resulting in an increase in download time.

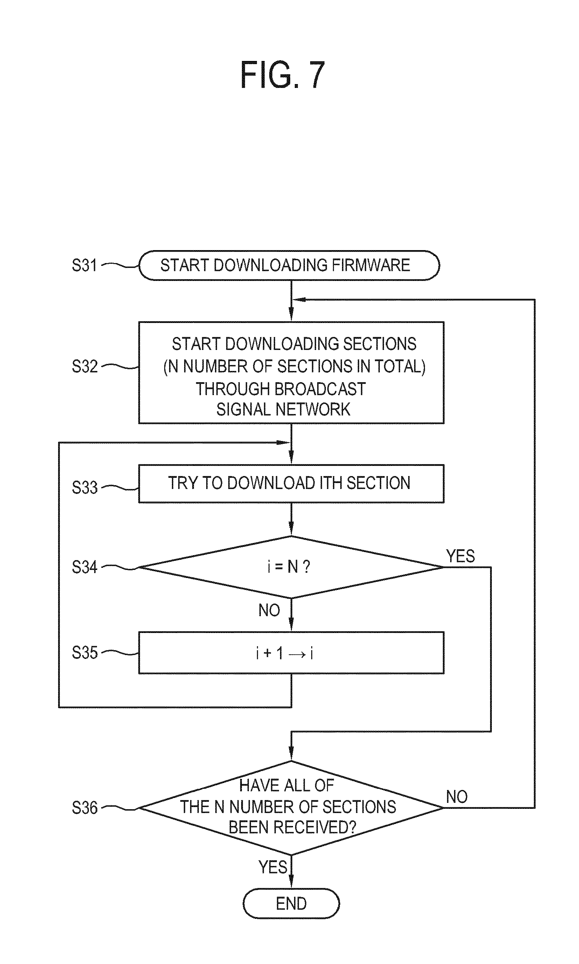

FIG. 7 illustrates a process of upgrading firmware using a known broadcasting signal network, through which set-top boxes of all users receive the same signal at the same time. The firmware is finely divided into transport stream (TS) signals, by section to be transmitted through the broadcast signal network, and first to last sections thereof are sequentially transmitted. Due to the nature of the broadcast signal which is easily affected by the surrounding environment, some signals may be lost or may fail during the downloading process. For example, satellite or terrestrial broadcasting signals may be affected by weather or the stat of a reception antenna. Then, the set-top box should wait until a next circulation period to receive the concerned section again, increasing the downloading time up to twice the original download time. Even in response to the undownloaded portion being an extremely small part of the entire firmware, the entire download time may increase due to the un-downloaded portion. In practice, the aforementioned case takes account of most of delays in download time.

Accordingly, one or more exemplary embodiments provide a digital broadcasting receiving device and a method for receiving data which promptly and accurately download data by minimizing the delay in data reception due to the surrounding environment.

Another exemplary embodiment is to provide a digital broadcast receiving device and a method of receiving data thereof which reduces overload to the Internet network.

Still another exemplary embodiment is to provide a digital broadcast receiving device and a method of receiving data thereof, which divides and receives a single data file by using both a broadcasting signal network and an Internet network.

According to aspect of an exemplary embodiment, a method for receiving data of a digital broadcasting receiving device is provided. The method including, receiving a predetermined section of a data file consisting of a plurality of sections, through a broadcasting signal network, and receiving the remaining sections of the plurality of sections of the data file through an Internet network.

The plurality of sections of the data file may be received through the broadcasting signal network, and in response to a part of the plurality of sections received through the broadcasting signal network has not been received, the part of the sections that has not been received is received through the Internet network.

The plurality of sections of the data file may be received through the broadcast signal network, and in response to the reception of the data file not being received through the broadcasting signal network, the remaining data file is received through the Internet network.

The data file may include one of software of a set-top box and content to be displayed by a display apparatus.

The method for receiving data of a digital broadcasting receiving device may further include automatically requesting transmission of the unreceived data file through the Internet network in response to a confirmation that part of the sections of the data file has not been received.

The method of receiving data from a digital broadcast receiving device may further include automatically requesting transmission of the remaining data file through the Internet network in response to the reception of the data file through the broadcasting signal network not being performed for a predetermined amount of time.

The data file received through the broadcasting signal network and the data file received through the Internet network may be capable of being combined, and the combined file may be executed or displayed by the digital broadcast receiving device.

The method of receiving data of a digital broadcast receiving device may further include generating a user interface (UI) which asks a user whether to receive through the Internet network the part of the data file in response to part of the data file not having been received.

The method of receiving data of a digital broadcast receiving device may further include generating a UI which asks a user whether to receive the remaining sections of the data file through the Internet network in response to the reception of the data file not being performed.

According to an aspect of another exemplary embodiment, a digital broadcasting receiving device is provided including, the device a broadcasting receiver configured to receive data through a broadcasting signal network, a network communicator configured to receive data through the Internet network, and a controller configured to control the broadcast receiver through an Internet network and network communicator to receive a predetermined section of a plurality of sections of a data file through the broadcasting signal network, and to receive the remaining sections of the data file excluding the predetermined section received through the broadcasting signal network.

The broadcasting receiver may receive a plurality of sections of a data file, and in response to a part of the plurality of sections of the data file received through the broadcasting receiver not having been received, the network communicator receives the part of the data file that has not been received.

The broadcasting receiver may receive a plurality of sections of a data file, and in response to the reception of the data file through the broadcasting signal network not being performed, the network communicator receives the remaining data file through the Internet network.

The data file may include one of software of a set-top box and content to be displayed by a display apparatus.

The controller may automatically request transmission of the unreceived data file through the Internet network in response to a confirmation that part of the data file has not been received.

The controller may be configured to automatically request transmission of the remaining data file through the network communicator in response to the reception of the data file through the broadcasting receiver not having been performed for a predetermined period of time.

The controller may combine the data file received through the broadcasting receiver and the data file received through the network communicator, and may execute or display the combined file.

The digital broadcasting receiving device may further include a user interface (UI) generator configured to generate a UI asking a user whether to receive the part of the sections of the data file through the network communicator in response to part of the sections of the data file not having been received.

The digital broadcasting receiving device may further include a UI generator configured to generate a UI asking a user whether to receive the remaining sections of the data file through the network communicator in response to the reception of the data file not being performed.

An aspect of an exemplary embodiment may further provide a digital broadcast receiving device including a controller configured to control a broadcast receiver and a network communicator to receive a predetermined section from among a plurality of sections of a data file through a broadcast signal network, and to receive the remaining sections of the data file through an Internet network.

The digital broadcast receiving device may further include a broadcast receiver configured to receive data of the data file through the broadcast signal network, and a network communicator configured to receive data of the data file through the Internet network.

The data file comprises one of software of a set-top box and content to be displayed by a display apparatus.

The digital broadcast receiving device may further include a user interface (UI) generator configured to generate a UI configured to ask a user whether to receive part of the sections of the data file through the network communicator in response to part of the sections of the data file not having been received.

The above and/or other aspects will become apparent and more readily appreciated from the following description of the exemplary embodiments, taken in conjunction with the accompanying drawings, in which:

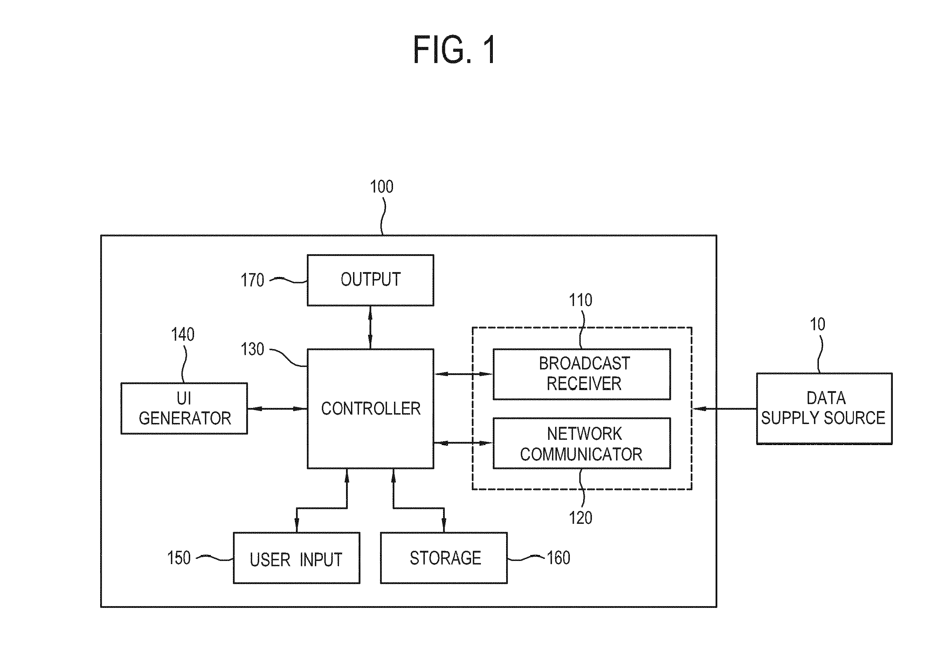

FIG. 1 is a block diagram of a digital broadcast receiving device, according to an exemplary embodiment;

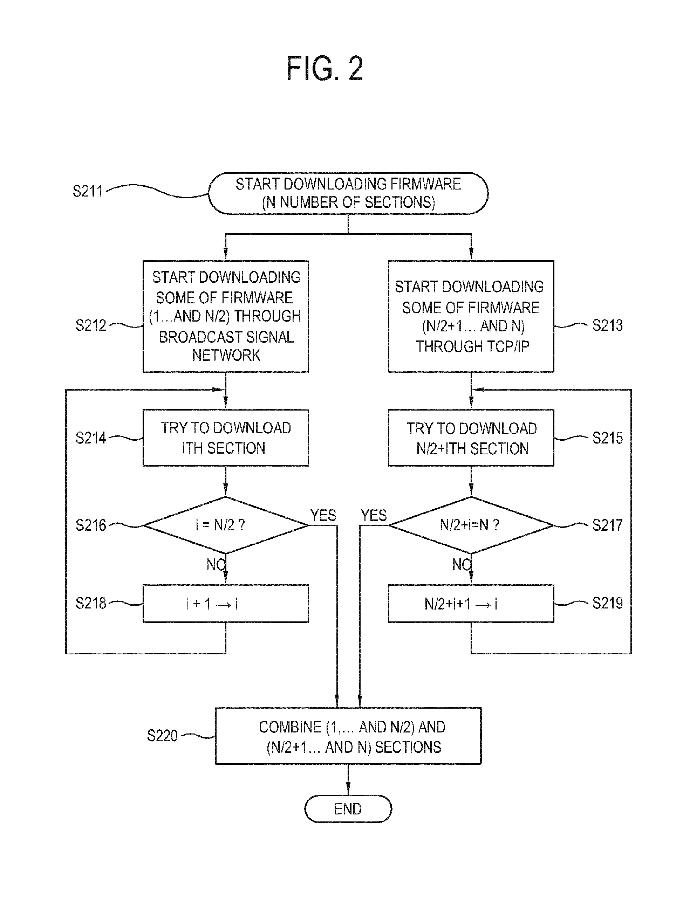

FIG. 2 is a flowchart showing a method of receiving data of a digital broadcast receiving device, according to an exemplary embodiment;
FIG. 3 is a flowchart showing another method of receiving data of a digital broadcast receiving device, according to another exemplary embodiment;
FIG. 4 is a flowchart showing another method of receiving data of a digital broadcast receiving device, according to another exemplary embodiment;
FIGS. 5 and 6 illustrate examples of a user interface (UI) which is generated according to an exemplary embodiment; and
FIG. 7 is a flowchart showing a method of receiving data of a known digital broadcast receiving device.

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

A digital broadcast receiving device 100 which will be described hereinafter may include a set-top box (not shown) which properly converts a signal transmitted from the outside and displays content of the signal on a TV. The set-top box may be provided within/outside the TV or other display.

The digital broadcasting receiving device 100 according to an exemplary embodiment may include a broadcast receiver 110 configured to receive data through a broadcast signal network, a network communicator 120 configured to receive data through an Internet network, and a controller 130 configured to control the broadcast receiver 110 and network communicator 120 to receive a predetermined section of a data file comprising a plurality of sections and to receive the remaining sections through the broadcasting signal network, and configured to receive the remaining sections of the data file through the Internet network.

For example, the broadcast receiver 110 may receive a broadcast signal transmitted by a broadcast station through a channel selected by a tuner (not shown). The channel may include satellite, terrestrial and cable channels. The broadcast signal may include video signal, broadcast signal, audio broadcast signal and data broadcast signal.

The broadcast receiver 110 may receive various additional data such as firmware of the set-top box together with the broadcast signal from a broadcasting station. The data may be divided into a plurality of sections, by which data is transmitted and received.

The broadcast receiver 110 may receive digital broadcast signals including software of the set-top box, through a digital broadcast system such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), and Integrated Services Digital Broadcast-Terrestrial (ISDB-T).

The broadcast signal and/or software data received through the broadcast receiver 110 may be stored in storage 160.

The network communicator 120 may receive data from a data supply source 10 through an Internet network using TCP/IP. Like the data transmitted through the broadcast network, the data transmitted through the Internet network may also be divided into a plurality of sections for transmission and reception.

The network communicator 120 may apply data communication such as Very High-Data Rate Digital Subscriber Line (VDSL), Ethernet, Token Ring, high definition multimedia interface (HDMI), universal serial bus (USB), low voltage differential signaling (LVDS), and HDMI Ethernet Channel (HEC); mobile communication such as 2G, 3G, 4G and Long Term Evolution (LTE); wireless Internet technology such as Wireless LAN (WLAN) (Wi-Fi), Wireless broadband (Wibro), World Interoperability for Microwave Access (Wimax), and high speed downlink packet access (HSDPA); and local area communication technology such as Bluetooth, radio frequency identification (RFID), infrared Data Association (IrDA), Ultra Wideband (UWB), and Zigbee.

The controller 130 may be configured to control respective elements of the digital broadcasting receiving device 100. For example, the controller 130 may control the broadcast receiver 110 and network communicator 120 to transmit and receive data to/from the data supply source 10, control the storage 160 to store data therein or to read data stored therein, and may control a UI generator 140 to generate a user interface (UI) to receive a user's command.

The controller 130 may control the broadcast receiver 110 to receive a part of a plurality of sections of data together with the broadcast signal, and control the network communicator 120 to concurrently receive the remaining sections of the data, to thereby increase the data reception rate.

The controller 130 may control the broadcast receiver 110 to receive the plurality of sections of data together with the broadcast signal. In response to some of the plurality of sections of data not having been received, the controller 130 may control the network communicator 120 to receive the unreceived sections of data. In response to a confirmation that a part of the plurality of sections of data has not been received, the controller 130 may automatically download the unreceived sections by using data information including data address (web address) or may provide a user with a UI to enable a user to decide whether to receive the unreceived data.

In response to it being difficult to receive the remaining sections of data due to an error while receiving the plurality of sections of data together with the broadcast signal, the controller 130 may control the network communicator 120 to receive the remaining sections of data. In response to the reception process of the plurality of sections not being smoothly performed for a predetermined period of time, the controller 130 may automatically download the remaining sections of data by using data information including the data address (web address), or may provide a user with an UI to enable a user to decide upon reception/non-reception of the remaining sections.

The controller 130 may include Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, and microprocessors.

The digital broadcast receiving device 100, according to an exemplary embodiment, may further include a UI generator 140 configured to generate a UI, a user input 150 configured to receive a user's command, a storage 160 configured to store therein various data, and an output 170 configured to output video, audio and graphics.

The UI generator 140 may generate a UI such as a message or a pop-up window displayed on a screen (not shown). A user may input a command or obtain necessary information through the UI on the screen.

In response to a part of sections of the data transmitted through the broadcasting signal network not having been received, the UI generator 140 may generate a UI providing information related to the missing sections, and asking a user whether to receive the missing sections through TCP/IP.

In response to the data reception through the broadcasting signal network not being performed for a predetermined period of time, the UI generator 140 may display a UI showing a message that the reception of the remaining sections is not possible due to reception error and asking a user whether they would like to receive the remaining sections through TCP/IP.

The user input 150 may include a keypad, a UI on a touch screen, a remote controller, a wireless mouse, a button, etc. That is, a user may input a command configured to divide and receive a single data file through the broadcast signal network and Internet network, a command to receive the missing sections of data, which was missed while being received through the broadcast signal network, through the Internet network, and a command for connecting and receiving through the Internet network the data which was suspended through the broadcast signal network.

The storage 160 may temporarily store therein programs for processing and controlling the controller 130, and input/output data. The storage 160 may store therein various content data transmitted through the broadcast receiver 110 and network communicator 120.

The storage 160 may include at least one storage medium of a flash memory type, hard disk type, multimedia card micro type, a card-type memory (e.g., SD or XD memory), random access memory (RAM), static random access memory (SRAM), read only memory (ROM), electrically erasable programmable read-only memory (EEPROM), programmable read-only memory (PROM), a magnetic memory, magnetic disk, optical disk, etc.

The output 170 may include a display such as a liquid crystal display (LCD) or an active matrix organic light emitting diode (AMOLED) display configured to display an image signal thereon, and a speaker outputting a video signal. The output 170 may include a touch screen through which a UI generated by the UI generator 140 is displayed and a user may directly input a command to the UI.

Hereinafter, a method of the digital broadcasting receiving device 100 receiving data of according to an exemplary embodiment will be described.

First, the digital broadcasting receiving device 100 starts downloading firmware comprising a plurality of sections (the N number of sections) from the data supply source 10 by a user's selection made through the user input 150 (S211). The UI generator 140 may provide a UI for a user to select whether to receive the data through the broadcasting signal network or Internet network and whether to concurrently divide and receive data through both the broadcast signal network and Internet network.

In response to a user selecting to concurrently divide and receive the data through both the broadcast signal network and the Internet network, some of the firmware(1,... and the N/2 number of sections) is received through the broadcast signal network (S212), and the remaining firmware (N/2+1,... and the N number of sections) is received through the Internet network (S213).

When some of sections (1,... and the N/2 number of sections) are downloaded sequentially through the broadcast signal network, the download operation is repeated until the ith section of data becomes the N/2th section (S214, S216 and S218).

When some of sections (N/2+1,... and the N number of sections) are sequentially downloaded through the Internet network, the download operation is repeated until the N/2+ith section becomes the Nth section (S215, S217 and S219).

The 1,... and the N/2 number of sections transmitted through the broadcasting signal network and the (N/2+1),... and the Nth sections transmitted through the Internet network are combined, executed or output to output 170 (S220).

As the single data file is divided and downloaded by section through the broadcast signal network and Internet network, data download time may be reduced.

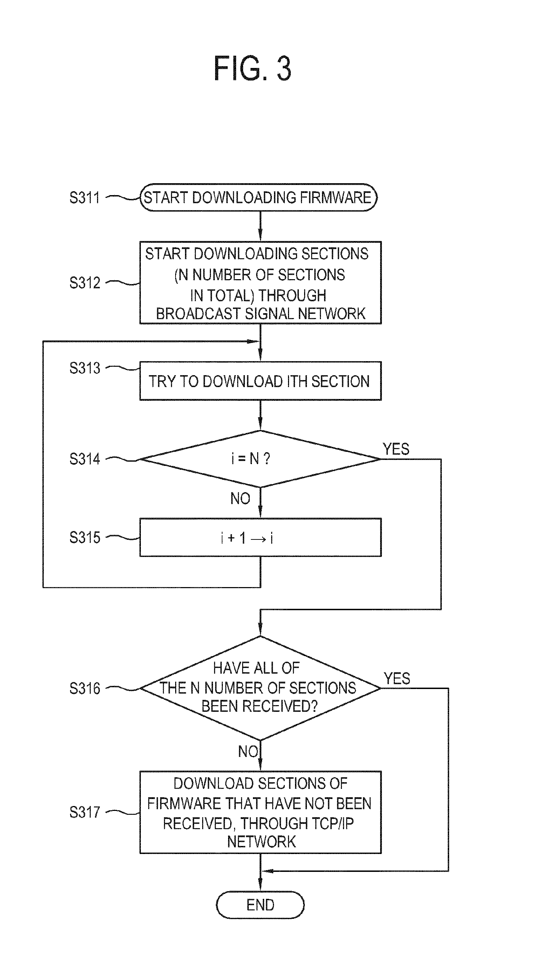

FIG. 3 is a flowchart showing a method of receiving data according to another exemplary embodiment. The digital broadcast receiving device 100 starts downloading firmware consisting of a plurality of sections (the N number of sections) from the data supply source 10, according to a user's selection made through the user input 150 (S311). At the time of selecting the download operation, data information including the web address of the download data file is stored in the storage 160.

A user selects and receives the N number of sections of data through the broadcasting signal network (S312).

When the 1,... and the N number of sections of data are downloaded through the broadcast signal network, the download operation is repeated until the ith section of data becomes the Nth section (S313, S314 and S315).

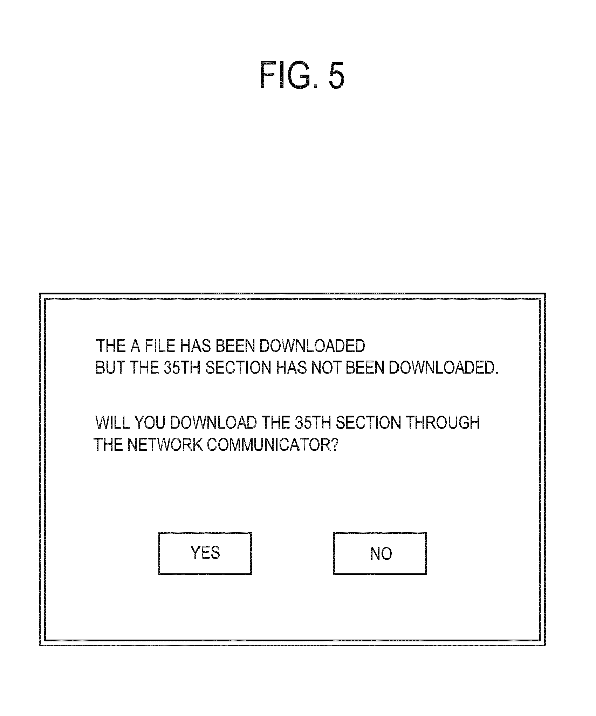

A check is made S316) as to whether the N number of sections of the data file are all received through the broadcast signal network. In response to all of the downloaded sections of data being received, the download is ended. In response to less than all of the sections of data being received, the unreceived sections of the data file are downloaded through the TCP/IP network (Internet network) (S317). In response to less than all of the sections being received, the unreceived sections of the data file may be automatically downloaded on the basis of the stored data information. Of course, the UI shown in FIG. 5 may be generated for a user to select whether to receive the unreceived sections of the data file, through the TCP/IP network.

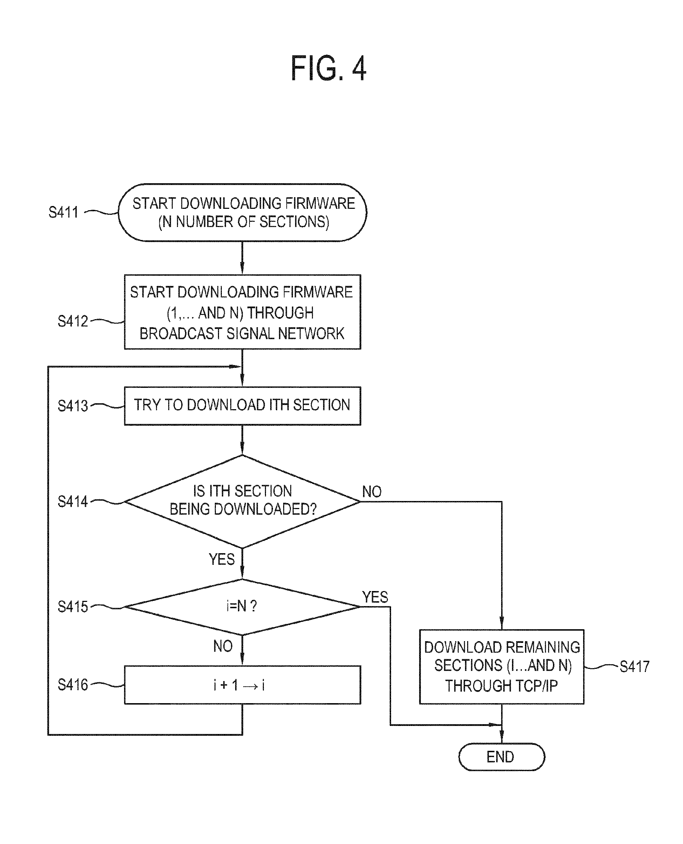

FIG. 4 illustrates a method of receiving data according to another exemplary embodiment. The digital broadcast receiving device 100 starts downloading firmware consisting of a plurality of sections (the N number of sections) from the data supply source 10 according to a user's selection made through the user input 150 (S411). At the time of selecting the download operation, data information including the web address of the downloaded data file may be stored in storage 160.

A user selects and receives the N number of sections of the firmware through the broadcast signal network (S412).

When 1,... and the N number of sections are downloaded through the broadcasting signal network (S413), the ith section of data may be suspended from being downloaded due to an error in the broadcast reception environment. In this case, a determination is made as to whether the downloading of the ith section has been suspended for a predetermined period of time (S414). In response to the downloading of the ith section being smoothly performed, the downloading operation is repeated until the ith section becomes the Nth section (S414 and S416).

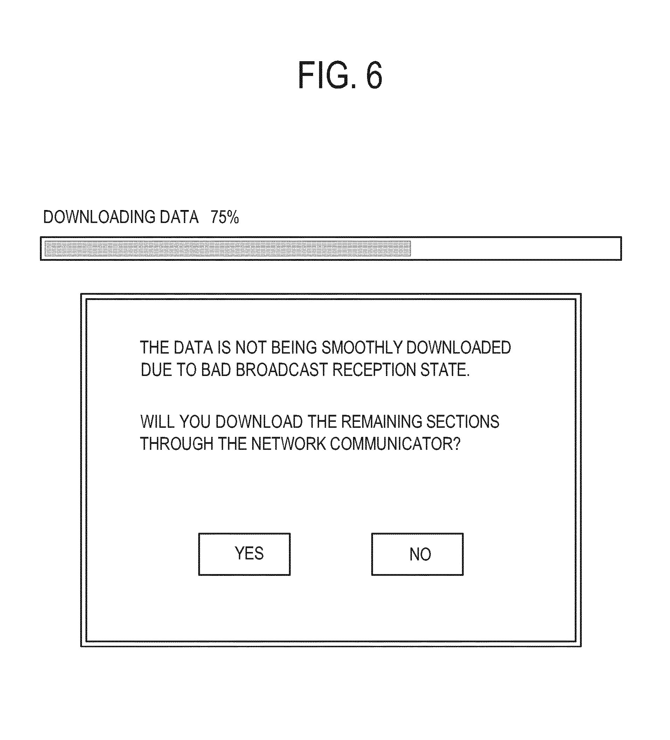

In response to the downloading of the ith section not being performed for more than a predetermined time, the remaining sections (i,... and N) are downloaded through the TCP/IP network (S417). In response to the downloading of the ith section not being performed for more than a predetermined period of time, the remaining sections (i,... and N) of the data file may be automatically downloaded, based on the stored data information. Of course, a UI shown in FIG. 6 may otherwise be generated for a user to select whether to receive the remaining sections (i,... and N) through the Internet network (TCP/IP network).

As described above, the method for receiving data of the digital broadcasting receiving device may not only improve the data reception rate by properly using the broadcast signal network and Internet network, but also may set off the disadvantage of the data reception through the broadcast signal network through the download via the Internet network, to be more convenient to a user.

According to the exemplary embodiments, the overload to the Internet network may be reduced, and the downloading time may be drastically reduced for a broadcast signal which may increase as a result of temporary download failure due to the surrounding environment.

When the time for normally downloading firmware without error, through the broadcast signal network is T, in response to the ith section of the firmware having been missed due to the environmental effect, the delay time may range from 0 up to T depending on the location of the missing section.

According to the exemplary embodiments, the missing section of the file that is received through the broadcast signal network may be received through the TCP/IP network, and thus, delay time which may occur may be close to o.

Although a few exemplary embodiments have been shown and described, it will be appreciated by those skilled in the art that changes may be made in these exemplary embodiments without departing from the principles of the invention, the range of which is defined in the appended claims.

## Claims

1. A method of receiving data for a digital broadcasting receiving device, the method comprising:
receiving a predetermined section of a data file consisting of a plurality of sections, through a broadcasting signal network; and
receiving the remaining sections of the plurality of sections of the data file through an Internet network.

2. The method according to claim 1, wherein the plurality of sections of the data file is received through the broadcasting signal network, and in response to a part of the plurality of sections received through the broadcasting signal network not having been received, the part of the sections that has not been received is received through the Internet network.

3. The method according to claim 1, wherein the plurality of sections of the data file is received through the broadcasting signal network, and in response to the reception of the data file through the broadcasting signal network not being performed, the remaining data file is received through the Internet network.

4. The method according to claim 2, further comprising automatically requesting transmission of the unreceived data file through the Internet network upon confirmation that part of the sections of the data file has not been received.

5. The method according to claim 3, further comprising automatically requesting transmission of the remaining data file through the Internet network in response to the reception of the data file through the broadcasting signal network not being performed for a predetermined period of time.

6. The method according to claim 2, further comprising generating a user interface UI asking a user whether to receive the part of the data file through the Internet network in response to the part of the data file not having been received.

7. The method according to claim 3, further comprising generating a UI asking a user whether to receive the remaining sections of the data file through the Internet network in response to the reception of the data file not being performed.

8. A digital broadcasting receiving device comprising:
a broadcasting receiver which receives data through a broadcasting signal network;
a network communication unit which receives data through the Internet network; and
a controller which controls the broadcasting receiver and network communication unit to receive a predetermined section of a plurality of sections of a data file through the broadcasting signal network, and to receive the remaining sections of the data file excluding the predetermined section received through the broadcasting signal network, through an Internet network.

9. The digital broadcasting receiving device according to claim 8, wherein the broadcasting receiver receives a plurality of sections of a data file, and in response to a part of the plurality of sections of the data file received through the broadcasting receiver has not been received, the network communication unit receives the part of the data file that has not been received.

10. The digital broadcasting receiving device according to claim 9, wherein the broadcasting receiver firstly receives a plurality of sections of a data file, and in response to the reception of the data file through the broadcasting signal network not being performed, the network communication unit receives the remaining data file through the Internet network.

11. The digital broadcasting receiving device according to claim 9, wherein the controller automatically requests transmission of the unreceived data file through the Internet network upon confirmation that the part of the sections of the data file has not been received.

12. The digital broadcasting receiving device according to one of claims 8 to 11, wherein the data file comprises one of software of a set-top box and a content to be displayed by a display apparatus.

13. The digital broadcasting receiving device according to claim 10, wherein the controller automatically requests transmission of the remaining data file through the network communication unit in response to the reception of the data file through the broadcasting receiver having not been performed for a predetermined period of time.

14. The digital broadcasting receiving device according to claim 9, 11 or 12, further comprising a user interface UI generator which generates a UI asking a user whether to receive the part of the sections of the data file through the network communication unit in response to the part of the sections of the data file not having been received.

15. The digital broadcasting receiving device according to claim 10, 12 or 13, further comprising a UI generator which generates a UI asking a user whether to receive the remaining sections of the data file through the network communication unit in response to the reception of the data file not being performed.
